# EUROPEAN PATENT APPLICATION

(11) **EP 4 607 659 A1**
(43) Date of publication of application: **27.08.2025**
(21) Application number: 25157396.0
(22) Date of filing: 12.02.2025
(51) Int. Cl.: H01M 50/103, H01M 50/184, H01M 50/186, H01M 50/193, H01M 50/636, H01M 50/30

(54) **ELECTRICAL ENERGY STORAGE DEVICE AND MANUFACTURING METHOD FOR THE SAME**

(30) Priority: 26.02.2024 JP 2024026698
(71) Applicant: Prime Planet Energy & Solutions, Inc., Chuo-ku, Tokyo 103-0022 (JP)
(72) Inventor: MAEDA, Hitoshi, Tokyo, 103-0022 (JP); YAMAUCHI, Yasuhiro, Tokyo, 103-0022 (JP)
(74) Representative: Kuhnen & Wacker Patent- und Rechtsanwaltsbüro PartG mbB

(57) **Abstract**

An electrical energy storage device (100) to be disclosed herein includes a case (10) that includes a penetration hole (15), and a sealing member (16) that seals the penetration hole (15). The sealing member (16) includes a base part (16b) that is integrated with the case (10) so as to continuously cover a peripheral part of the penetration hole (15) at an inner wall of the penetration hole (15) and an outer surface (14u) of the case (10), and a gas permeation film (16m) that is thermally fused to the base part (16b) outside the case (10) so as to cover the penetration hole (15).

## Description

### BACKGROUND OF THE DISCLOSURE

### 1. Field

The present disclosure relates to an electrical energy storage device, and a manufacturing method for the same.

### 2. Background

One of the conventionally known electrical energy storage devices includes a case, an electrode body that is accommodated in the case, and a gas permeation film that is provided in the case. References related to this include Japanese Patent Application Publication No. 2004-228019, Japanese Patent Application Publication No. 2017-010946, and WO 2021/117408. For example, Japanese Patent Application Publication No. 2004-228019 discloses an electrical energy storage device including a case having a degassing hole, and an alloy valve film (gas permeation film made of an alloy) that closes the degassing hole and selectively permeates a hydrogen gas. According to Japanese Patent Application Publication No. 2004-228019, an amorphous alloy film containing Zr and Ni, a Pd-based alloy film, or the like can be used as the alloy valve film.

### SUMMARY

According to the knowledge of the present inventors, the alloy valve film as disclosed in Japanese Patent Application Publication No. 2004-228019 generally tends to use expensive materials and can require a complicated work for attachment to the case. In view of this, an electrical energy storage device with a novel structure has been demanded from the viewpoints of reducing the cost and improving the workability, for example.

An electrical energy storage device according to the present disclosure includes a case that is made of metal and includes a penetration hole, an electrode body that is accommodated in the case, and a sealing member that seals the penetration hole, in which the sealing member includes a base part that is made of resin and is integrated with the case so as to continuously cover at least a peripheral part of the penetration hole at an inner wall of the penetration hole and an outer surface of the case, and a gas permeation film that is made of resin and is thermally fused to the base part outside the case so as to cover the penetration hole.

In the present disclosure, the alloy valve film as disclosed in Japanese Patent Application Publication No. 2004-228019 becomes unnecessary and the material cost can be reduced compared to the disclosure in Japanese Patent Application Publication No. 2004-228019. In addition, in the present disclosure, the base made of resin is integrated with the case, and the gas permeation film is thermally fused to the base. With such a structure, the gas permeation film can be easily attached to the case and the workability can be improved.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating an electrical energy storage device 100 according to an embodiment;
FIG. 2 is a schematic longitudinal cross-sectional view taken along line II-II in FIG. 1;
FIG. 3 is a longitudinal cross-sectional view schematically illustrating a vicinity of an electrolyte solution injection hole in FIG. 1;
FIG. 4 is a diagram corresponding to FIG. 3 in a sealing step; and
FIG. 5 is a perspective view schematically illustrating the vicinity of the electrolyte solution injection hole in the sealing step.

### DETAILED DESCRIPTION OF THE PREFERRED EMBODIMENTS

Hereinafter, preferred embodiments of the art disclosed herein will be described with reference to the drawings as appropriate. Matters that are other than matters particularly mentioned in the present specification and that are necessary for the implementation of the art disclosed herein (for example, the general configuration and manufacturing process of an electrical energy storage device that do not characterize the art disclosed herein) can be grasped as design matters of those skilled in the art based on the prior art in the relevant field. The art disclosed herein can be implemented on the basis of the disclosure of the present specification and common technical knowledge in the relevant field. Moreover, in the present specification, the notation "A to B" for a range signifies a value more than or equal to A and less than or equal to B, and is meant to encompass also the meaning of being "preferably more than A" and "preferably less than B".

### <Electrical energy storage device 100>

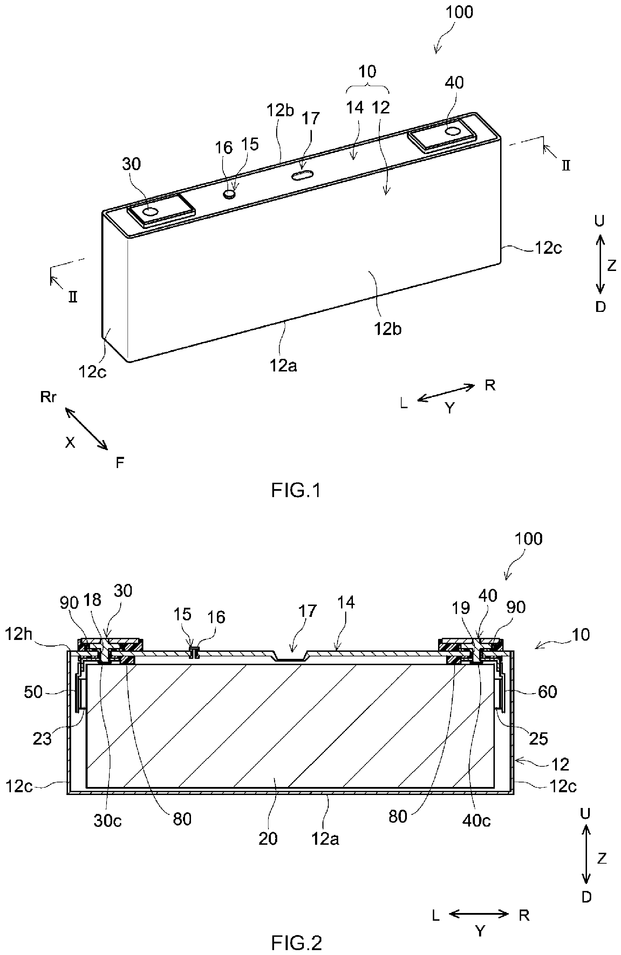

FIG. 1 is a perspective view of an electrical energy storage device 100. FIG. 2 is a schematic longitudinal cross-sectional view taken along line II-II in FIG. 1. Note that in the description below, the members and parts with the same operation are denoted by the same reference sign and the overlapping description may be omitted or simplified. In addition, reference signs F, Rr, L, R, U, and D in the drawings respectively denote front, rear, left, right, up, and down, and reference signs X, Y, and Z in the drawings respectively denote a short side direction of the electrical energy storage device 100, a long side direction that is orthogonal to the short side direction, and an up-down direction. The up-down direction Z is a direction that typically coincides with a vertical direction. However, these are merely directions for convenience of description and do not limit the mode of installation of the electrical energy storage device 100.

As illustrated in FIG. 2, the electrical energy storage device 100 includes a case 10, an electrode body 20, a positive electrode terminal 30, a negative electrode terminal 40, and a sealing member 16. The electrical energy storage device 100 further includes an electrolyte solution (not illustrated) here. The electrical energy storage device 100 is a nonaqueous electrolyte solution secondary battery here. The electrical energy storage device 100 is preferably a lithium ion secondary battery. Note that in the present specification, the term "electrical energy storage device" refers to general devices that are capable of being charged and discharged repeatedly, and corresponds to a concept encompassing secondary batteries such as lithium ion secondary batteries and nickel-hydrogen batteries and capacitors such as lithium ion capacitors and electrical double-layer capacitors.

The case 10 is a housing that accommodates the electrode body 20 and the electrolyte solution. Here, as illustrated in FIG. 1, the case 10 has an outer shape having a flat and bottomed rectangular parallelepiped shape (square shape). The material of the case 10 may be the same as a material that has been used conventionally, and is not particularly limited. The case 10 is formed of metal and is preferably formed of, for example, aluminum, an aluminum alloy, iron, an iron alloy, or the like.

As illustrated in FIG. 2, in this embodiment, the case 10 includes a case main body 12 with a bottomed square shape (box shape) having an opening 12h on one surface (here, upper surface), and a sealing plate (lid body) 14 that seals the opening 12h of the case main body 12. The case 10 is integrated in such a way that the sealing plate 14 is bonded (for example, bonded by welding) to a periphery of the opening 12h of the case main body 12. The case 10 is hermetically sealed.

As illustrated in FIG. 1, the case main body 12 includes a bottom surface 12a with a substantially rectangular shape having a pair of short sides and a pair of long sides, a pair of long side surfaces 12b that extend from the pair of long sides of the bottom surface 12a and face each other, and a pair of short side surfaces 12c that extend from the pair of short sides of the bottom surface 12a and face each other. The bottom surface 12a faces the opening 12h. In a plan view, the area of the long side surface 12b is larger than that of the short side surface 12c.

Note that in the present specification, the term "substantially rectangular shape" encompasses, in addition to a perfect rectangular shape (rectangle), for example, a shape whose corner connecting a long side and a short side of the rectangular shape is rounded, a shape whose corner includes a notch, and the like.

The sealing plate 14 is a plate-shaped member that closes the opening 12h of the case main body 12 as illustrated in FIG. 2. The sealing plate 14 faces the bottom surface 12a of the case main body 12. The sealing plate 14 forms an upper wall of the case 10 here. The sealing plate 14 has a substantially rectangular shape in the plan view. The sealing plate 14 is provided with an electrolyte solution injection hole 15, a discharge valve 17, and two terminal extraction holes 18 and 19. The discharge valve 17 is configured to fracture when pressure inside the case 10 reaches a predetermined value or more and discharge a gas in the case 10 to the outside. The terminal extraction holes 18 and 19 penetrate the sealing plate 14 in the up-down direction Z. The terminal extraction holes 18 and 19 respectively have inner diameters that enable penetration of the positive electrode terminal 30 and the negative electrode terminal 40 before the electrode terminals are attached to the sealing plate 14 (before a caulking process).

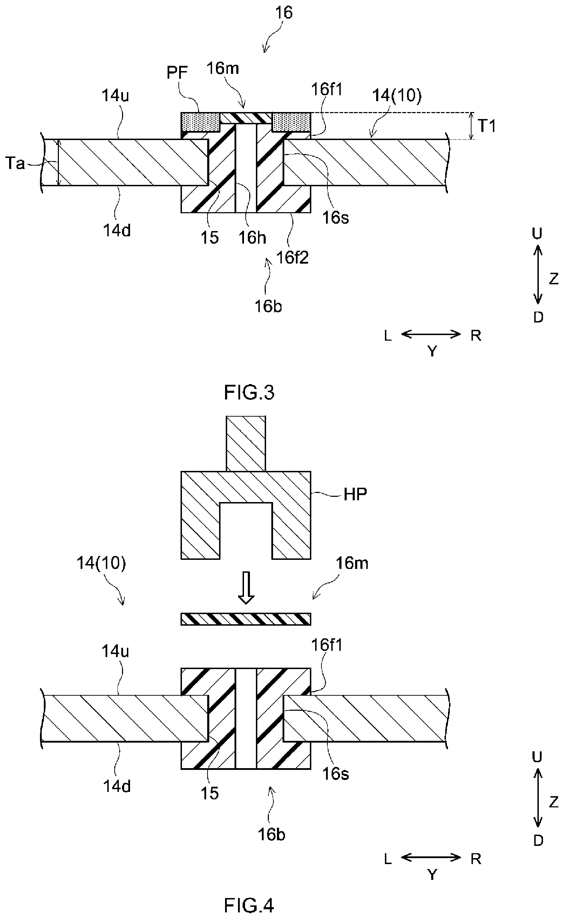

FIG. 3 is a longitudinal cross-sectional view schematically illustrating a vicinity of the electrolyte solution injection hole 15. The sealing plate 14 has an upper surface 14u and a lower surface 14d. The upper surface 14u side of the sealing plate 14 is on the outside of the case 10 and the lower surface 14d side of the sealing plate 14 is on the inside the case 10. Although there is no particular limitation, a thickness (plate thickness) Ta of the sealing plate 14 (a surface of the case 10 where the electrolyte solution injection hole 15 is provided) is preferably 5 mm or less and more preferably 1 to 5 mm (for example, 2 mm) from the viewpoints of reducing the cost and the weight. The case 10 with the small thickness as described above is easily deformable depending on the internal pressure, so that the battery expansion easily occurs in particular, which will be described in detail below. For this reason, it is highly effective to apply the art disclosed herein.

The electrolyte solution injection hole 15 is used to inject the electrolyte solution after the sealing plate 14 is assembled to the case main body 12. The electrolyte solution injection hole 15 is a penetration hole penetrating the sealing plate 14 in the up-down direction Z. In the long side direction Y, the electrolyte solution injection hole 15 is provided between the positive electrode terminal 30 and the discharge valve 17 here. The electrolyte solution injection hole 15 has a substantially circular shape in the plan view here. The electrolyte solution injection hole 15 is sealed with the sealing member 16 after the electrolyte solution is injected. The sealing member 16 will be described below. Note that although the electrolyte solution injection hole 15 is provided in the sealing plate 14 in this embodiment, the electrolyte solution injection hole 15 may be provided in the case main body 12 in another embodiment (for example, in any of the bottom surface 12a, the long side surfaces 12b, and the short side surfaces 12c). The electrolyte solution injection hole 15 is one example of the penetration hole.

In this specification, the term "substantially circular shape" refers to not just a perfect circular shape (perfect circle) but also a circular shape in which the curvature of an arc is locally different (for example, ellipse), a shape derived from a perfect circle or a circle, and the like.

The positive electrode terminal 30 is disposed at an end part of the sealing plate 14 on one side in the long side direction Y (on a left end part in FIG. 1 and FIG. 2). As illustrated in FIG. 2, the positive electrode terminal 30 extends from the inside of the sealing plate 14 to the outside through the terminal extraction hole 18. Here, the positive electrode terminal 30 is caulked to a peripheral part of the sealing plate 14 that surrounds the terminal extraction hole 18 by caulking. A caulking part 30c is formed at an end part of the positive electrode terminal 30 on the case main body 12 side (a lower end part in FIG. 2). The positive electrode terminal 30 is preferably formed of metal and is more preferably formed of, for example, aluminum or an aluminum alloy. The positive electrode terminal 30 is electrically connected to a positive electrode tab 23 of the electrode body 20 through a positive electrode current collecting part 50 inside the case 10. The positive electrode terminal 30 is insulated from the sealing plate 14 by an internal insulating member 80 and a gasket 90.

The negative electrode terminal 40 is disposed at an end part of the sealing plate 14 on the other side in the long side direction Y (on a right end part in FIG. 1 and FIG. 2). As illustrated in FIG. 2, the negative electrode terminal 40 extends from the inside of the sealing plate 14 to the outside through the terminal extraction hole 19. Here, the negative electrode terminal 40 is caulked to a peripheral part of the sealing plate 14 that surrounds the terminal extraction hole 19 by caulking. A caulking part 40c is formed at an end part of the negative electrode terminal 40 on the case main body 12 side (a lower end part in FIG. 2). The negative electrode terminal 40 is preferably formed of metal and is more preferably formed of copper or a copper alloy, for example. The negative electrode terminal 40 is electrically connected to a negative electrode tab 25 of the electrode body 20 through a negative electrode current collecting part 60 inside the case 10. The negative electrode terminal 40 is insulated from the sealing plate 14 by the internal insulating member 80 and the gasket 90.

The electrode body 20 is accommodated inside the case 10. The structure and mode of the electrode body 20 may be similar to the conventional ones without particular limitations. The number of electrode bodies 20 to be accommodated in one case 10 is not limited in particular and may be one, or two or more (plural). Although the illustration is omitted, the electrode body 20 includes a positive electrode and a negative electrode typically. The positive electrode typically includes a positive electrode current collector and a positive electrode active material layer fixed on the positive electrode current collector. The negative electrode typically includes a negative electrode current collector and a negative electrode active material layer fixed on the negative electrode current collector. The electrode body 20 may be accommodated inside the case 10 while being covered with an insulating sheet (electrode body holder) made of resin.

The electrode body 20 is here a wound electrode body in which the positive electrode with a band shape and the negative electrode with a band shape are stacked through a separator with a band shape and wound in a longitudinal direction using a winding axis as a center. However, in another embodiment, the electrode body 20 may be a multilayer electrode body in which a plurality of positive electrodes with a square shape (typically, a rectangular shape) and a plurality of negative electrodes with a square shape (typically, a rectangular shape) are stacked on each other in an insulated state. In this embodiment, the electrode body 20 is disposed inside the case 10 with the winding axis substantially parallel to the long side direction Y. However, in another embodiment, the electrode body 20 may be disposed inside the case 10 with the winding axis substantially parallel to the up-down direction Z, for example.

As illustrated in FIG. 2, the positive electrode tab 23 is provided in the positive electrode of the electrode body 20. The positive electrode tab 23 is a part of the positive electrode current collector here. The positive electrode tab 23 has a convex shape here, and protrudes from the electrode body 20 to one side in the long side direction Y (to the left side in FIG. 2). The positive electrode tab 23 is electrically connected to the positive electrode terminal 30 through the positive electrode current collecting part 50 here. In addition, the negative electrode tab 25 is provided in the negative electrode of the electrode body 20. The negative electrode tab 25 is a part of the negative electrode current collector here. The negative electrode tab 25 has a convex shape here, and protrudes from the electrode body 20 to the other side in the long side direction Y (to the right side in FIG. 2). The negative electrode tab 25 is electrically connected to the negative electrode terminal 40 through the negative electrode current collecting part 60 here.

The electrolyte solution may be similar to the conventional one without particular limitations. The electrolyte solution is typically a nonaqueous electrolyte solution containing a nonaqueous solvent and a supporting salt (electrolyte salt). However, the electrolyte solution may be an aqueous electrolyte solution containing an aqueous solvent. Examples of the nonaqueous solvent include carbonates such as ethylene carbonate, dimethyl carbonate, and ethyl methyl carbonate. The nonaqueous solvent preferably contains carbonates. In particular, the nonaqueous solvent preferably contains a cyclic carbonate and a chained carbonate. Examples of the supporting salt include fluorine-containing lithium salts such as lithium hexafluorophosphate (LiPF₆). The electrolyte solution may additionally contain an additive as necessary.

The sealing member 16 is a member that seals the electrolyte solution injection hole (penetration hole) 15. As illustrated in FIG. 3, the sealing member 16 includes a base part 16b, a gas permeation film 16m, and a thermal fusion part PF of the base part 16b and the gas permeation film 16m. On the upper surface (outer surface) 14u of the case 10, a protruding height T1 of the sealing member 16 is preferably smaller than the thickness (the average length in the up-down direction Z) of the positive electrode terminal 30 and/or the negative electrode terminal 40. By suppressing the protruding height of the sealing member 16, an interference of the sealing member 16 (particularly, the gas permeation film 16m) with another member, which results in damage or breakage of the sealing member 16, can be suppressed.

The base part 16b is integrated with the case 10. The base part 16b is attached to the sealing plate 14 here, and is integrated with the sealing plate 14. The base part 16b is attached to the sealing plate 14 so that the base part 16b will not be detached. In this embodiment, the sealing member 16 is attached to the case 10 (here, the sealing plate 14) by a method of insert molding (integral molding), which will be described in detail in the paragraphs about a manufacturing method. Thus, the adhesion between the case 10 and the base part 16b is increased and the sealability and the reliability of the sealing member 16 can be improved. In addition, since the structure is simplified, the number of components can be reduced, which is another advantage. In another embodiment, however, the base part 16b may be bonded to the case 10 by, for example, friction stir welding or the like, or may be bonded to the case 10 through an adhesive layer (adhesive or the like).

The base part 16b is made of resin. The base part 16b is preferably formed of, for example, a resin material that is excellent in integrity with the case 10 and the moldability and has the resistance against the electrolyte solution to be used (electrolyte solution resistance) and the electrically insulating property. Specific examples include polyethylene (PE), polypropylene (PP), polyamide (PA), polyphenylene sulfide (PPS), perfluoroalkoxy alkane (PFA), perfluoroethylene propene copolymer (FEP), polyethylene terephthalate (PET), and the like. In particular, it is preferable to use at least one resin material among polyethylene (PE), polypropylene (PP), polyamide (PA), and polyphenylene sulfide (PPS). These resins are excellent in integrity with the case 10 made of metal and/or the gas permeation film 16m; therefore, the sealability and the reliability of the sealing member 16 can be enhanced. In addition, since these resins are relatively excellent in resistance against the electrolyte solution compared to polybutylene terephthalate (PBT) or ABS resin, for example, the chemical durability of the sealing member 16 can also be improved. The resin material is preferably a thermoplastic resin. The resin material may contain a conventionally known additive or a filler such as ceramic.

As illustrated in FIG. 3, the base part 16b continuously covers at least a peripheral part of the electrolyte solution injection hole 15 at an inner wall of the electrolyte solution injection hole (penetration hole) 15 and the upper surface (outer surface) 14u of the case 10 (specifically, the sealing plate 14). The base part 16b further covers continuously the peripheral part of the electrolyte solution injection hole 15 at the lower surface (inner surface) 14d of the case 10 (specifically, the sealing plate 14) here. That is to say, the base part 16b necessarily includes a shaft part 16s with a hollow shape that covers the inner wall of the electrolyte solution injection hole 15, and an outer flange part 16f1 that is integrally provided at the shaft part 16s and covers the peripheral part of the electrolyte solution injection hole 15 at the upper surface 14u of the case 10. Here, the base part 16b further includes an inner flange part 16f2 that is integrally provided at the shaft part 16s and covers the peripheral part of the electrolyte solution injection hole 15 at the lower surface 14d of the case 10. The outer flange part 16f1 and the inner flange part 16f2 function as a locking part that prevents the detachment of the base part 16b. Thus, the integrity between the case 10 and the base part 16b is increased and the sealability and the reliability of the sealing member 16 can be improved.

The shaft part 16s extends along the electrolyte solution injection hole 15. An axial line of the shaft part 16s extends along the up-down direction Z here. The shaft part 16s preferably covers the entire inner wall of the electrolyte solution injection hole 15. The shaft part 16s has a hollow, substantially cylindrical tubular shape here. The shaft part 16s includes a penetration hole 16h extending along the up-down direction Z on an inner peripheral side in a radial direction of the shaft part 16s. An upper end part of the shaft part 16s is connected to the outer flange part 16f1. A lower end part of the shaft part 16s, that is, an end part on a side opposite to a side where the outer flange part 16f1 exists is connected to the inner flange part 16f2.

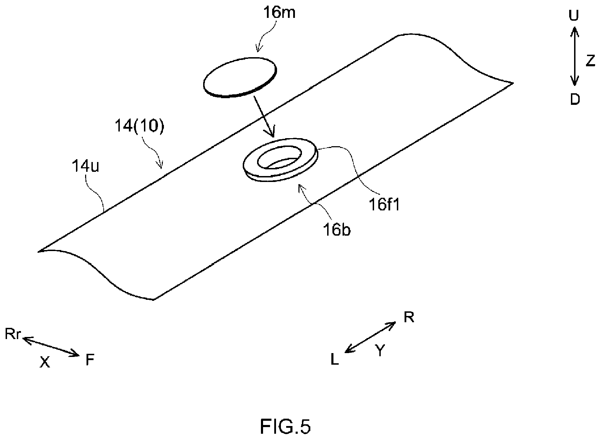

The outer flange part 16f1 extends from a first end part of the shaft part 16s and is disposed outside the case 10. The outer flange part 16f1 continuously extends from the upper end part of the shaft part 16s and protrudes from the electrolyte solution injection hole 15 of the sealing plate 14 to the outside of the case 10 here. In this embodiment, the outer flange part 16f1 and the shaft part 16s are molded integrally (as one member). Therefore, there is no explicit border between the outer flange part 16f1 and the shaft part 16s. The outer shape of the outer flange part 16f1 is an annular shape along the electrolyte solution injection hole 15 (see also FIG. 5). In the outer flange part 16f1, the thermal fusion part PF with the gas permeation film 16m is provided.

The inner flange part 16f2 extends from a second end part of the shaft part 16s and is disposed inside the case 10. The inner flange part 16f2 continuously extends from the lower end part of the shaft part 16s and protrudes to the inside of the sealing plate 14 (on the electrode body 20 side) here. In this embodiment, the inner flange part 16f2 and the shaft part 16s are molded integrally (as one member). Therefore, there is no explicit border between the inner flange part 16f2 and the shaft part 16s. The outer shape of the inner flange part 16f2 is an annular shape along the electrolyte solution injection hole 15. The inner flange part 16f2 has the same shape as the outer flange part 16f1 here. The outer diameter of the inner flange part 16f2 is substantially the same as the outer diameter of the outer flange part 16f1 here. However, the inner flange part 16f2 may be different from the outer flange part 16f1 in shape or outer diameter.

Although there is no particular limitation, at least one of the peripheral part of the electrolyte solution injection hole (penetration hole) 15 at the upper surface (outer surface) 14u of the case 10 (a part where the outer flange part 16f1 is provided) and the peripheral part of the electrolyte solution injection hole (penetration hole) 15 at the lower surface (inner surface) 14d of the case 10 (a part where the inner flange part 16f2 is provided) is preferably subjected to surface roughening processing. Thus, the adhesion between the case 10 and the base part 16b can be improved further and the sealability and the reliability of the sealing member 16 can be improved. From the viewpoint of achieving such effects at a high level, the aforementioned surface roughening processing is preferably performed continuously in a circumferential direction of the electrolyte solution injection hole (penetration hole) 15.

The gas permeation film 16m is a film with air permeability that covers the electrolyte solution injection hole (penetration hole) 15 outside the case 10. The air can transmit through the gas permeation film 16m on the inside and the outside of the case 10. The gas permeation film 16m is configured to be unable to transmit liquid (for example, moisture or nonaqueous electrolyte solution) and able to transmit vapor derived from the nonaqueous electrolyte solution (for example, hydrocarbon gas such as methane gas or ethane gas, carbon dioxide, hydrogen, or the like). According to the present inventors' knowledge, in the electrical energy storage device 100, the nonaqueous electrolyte solution can be decomposed due to, for example, temperature degradation, repeated charging and discharging, or the like, which can result in gas generation inside the case 10. In view of this, the gas permeation film 16m is provided as described in the art disclosed herein, so that the nonaqueous electrolyte solution that has become gas is released and the battery expansion can be suppressed. As a result, the thickness of the case 10 can be reduced and the cost and weight can be reduced. In addition, attaching the gas permeation film 16m to the electrolyte solution injection hole 15 eliminates the necessity to open another hole, so that the workability and productivity can be improved. The gas permeation film 16m preferably has higher permeability of the vapor derived from the nonaqueous electrolyte solution than the water vapor. The gas permeation film 16m is more preferably configured so as not to transmit water vapor.

In this embodiment, the gas permeation film 16m is thermally fused on the base part 16b so as to cover the electrolyte solution injection hole (penetration hole) 15, which will be described in detail in the paragraphs about the manufacturing method. By using the thermal fusion, the gas permeation film 16m can be attached to the case 10 easily and the workability can be improved. In addition, the structure of the sealing member 16 can be simplified. Note that in the present specification, the term "film" means a structure that spreads in a planar shape. The "film" has a thickness of typically 1000 µm or less, and may be, for example, 500 µm or less or 250 µm or less.

The gas permeation film 16m is made of resin. The gas permeation film 16m is preferably formed of a resin material, for example, that is excellent in thermal fusion property to the base part 16b and in transmission of vapor derived from the nonaqueous electrolyte solution, and that has an electrical insulating property and the resistance against the electrolyte solution to be used (electrolyte solution resistance). Specific examples include polyethylene (PE), polypropylene (PP), polyphenylene sulfide (PPS), polytetrafluoroethylene (PTFE), and the like. In particular, it is preferable to use at least one resin material among polyethylene (PE) and polytetrafluoroethylene (PTFE). Examples of the commercial products of the gas permeation film 16m made of PTFE include TEMISH (registered trademark) manufactured by Nitto Denko Corporation, POREFLON (registered trademark) manufactured by Sumitomo Electric Industries, Ltd., and the like. The gas permeation film 16m made of PE may be, for example, nonwoven fabric that is commercially available as a moisture-permeable water-proof sheet. The gas permeation film 16m may be formed of the same kind of resin material as the base part 16b. The gas permeation film 16m may have a lower melting point than the resin material of the base part 16b.

The gas permeation film 16m is fixed to the base part 16b (specifically, the outer flange part 16f1) through the thermal fusion part PF to be described below. The gas permeation film 16m has a substantially circular shape here in the plan view (see also FIG. 5). The outer diameter of the gas permeation film 16m is larger than the diameter of the electrolyte solution injection hole 15. The gas permeation film 16m covers the electrolyte solution injection hole 15 from above and extends to a periphery of the electrolyte solution injection hole 15 on the upper surface 14u of the sealing plate 14.

The thermal fusion part PF is a bonding portion between the base part 16b (specifically, the outer flange part 16f1) and the gas permeation film 16m. By the thermal fusion part PF, the gas permeation film 16m can be fixed to the base part 16b stably and the adhesion can be increased. The thermal fusion part PF is provided at a part where the outer flange part 16f1 and the gas permeation film 16m overlap with each other in the plan view. The thermal fusion part PF is provided at an outer peripheral part of the annular outer flange part 16f1 here. The thermal fusion part PF has an annular shape in the plan view. The thermal fusion part PF includes a flow mark that typically results from melting and solidifying of resin.

### <Manufacturing method for electrical energy storage device 100>

The electrical energy storage device 100 as described above can be manufactured by a manufacturing method including, for example, an integrating step (step S1), a preparing step (step S2), a liquid injecting step (S3), and a sealing step (step S4). The other manufacturing process may be similar to the conventional one. The manufacturing method disclosed herein may further include another step at an optional stage. Each step will be described below.

The integrating step (step S1) is a step of preparing the case 10 that is made of metal and includes the electrolyte solution injection hole (penetration hole) 15, and integrating the base part 16b made of resin with the case 10 so as to continuously cover at least the peripheral part of the electrolyte solution injection hole (penetration hole) 15 at the inner wall of the electrolyte solution injection hole (penetration hole) 15 and the outer surface of the case 10. Thus, the base part 16b can be attached to the case 10 firmly. In a preferred aspect, the base part 16b is integrated with the case 10 (for example, the sealing plate 14) by insert molding (integral molding). In this case, the base part 16b can be stably attached to the case 10 (specifically, the sealing plate 14) easily even when the case 10 (specifically, the sealing plate 14) has the thickness Ta (see FIG. 3) as small as 5 mm or less, for example. In addition, the adhesion between the case 10 and the base part 16b is increased and the sealability and the reliability of the sealing member 16 can be improved. In addition, since the structure becomes simple, the number of components can be reduced and the cost can be reduced.

The preparing step (step S2) is a step of preparing an assembly including the case 10 integrated with the base part 16b and the electrode body 20 accommodated in the case 10. Specifically, first, for example, the electrode body 20 is prepared, and the positive electrode current collecting part 50 is attached to the positive electrode tab 23 and the negative electrode current collecting part 60 is attached to the negative electrode tab 25 in the electrode body 20. Next, the sealing plate 14 with the base part 16b attached thereto, the positive electrode terminal 30, and the negative electrode terminal 40 are prepared, and the positive electrode terminal 30, the negative electrode terminal 40, the positive electrode current collecting part 50, and the negative electrode current collecting part 60 are attached to the sealing plate 14. Thus, the sealing plate 14, the positive electrode terminal 30, the negative electrode terminal 40, and the electrode body 20 are integrated. Next, the case main body 12 is prepared, the electrode body 20 integrated with the sealing plate 14 is accommodated in the internal space of the case main body 12, and the opening 12h of the case main body 12 is sealed with the sealing plate 14. The sealing can be performed by, for example, bonding by welding such as laser welding. In this manner, the assembly is prepared.

The liquid injecting step (step S3) is a step of injecting the electrolyte solution into the case 10 through the electrolyte solution injection hole (penetration hole) 15. In a preferred aspect, the liquid injection is performed using a conventionally known electrolyte solution injection device (not illustrated) including a liquid injection nozzle to inject the electrolyte solution, an electrolyte solution storage part that communicates with the liquid injection nozzle, and liquid sending means that sends the electrolyte solution from the electrolyte solution storage part to the liquid injection nozzle (for example, pressure pump). In this case, the electrolyte solution is injected with the liquid injection nozzle inserted to the electrolyte solution injection hole 15 and after the liquid injection, the liquid injection nozzle is pulled out of the electrolyte solution injection hole 15. In another embodiment, however, the liquid may be injected using a dispenser or the like, for example.

The sealing step (step S4) is a step of closing the electrolyte solution injection hole (penetration hole) 15 by thermally fusing the gas permeation film 16m made of resin to the base part 16b along the radial direction of the electrolyte solution injection hole (penetration hole) 15 outside the case 10. In this embodiment, at least the gas permeation film 16m (preferably, the gas permeation film 16m and the outer flange part 16f1 of the base part 16b) is fused to bond the gas permeation film 16m and the base part 16b outside the case 10 (at the upper surface 14u of the sealing plate 14 here). By using the thermal fusion, the gas permeation film 16m can be attached to the case 10 more easily than before, and the workability and productivity can be improved. In addition, the structure of the sealing member 16 can be simplified.

The gas permeation film 16m and/or the base part 16b may be melted by any method without particular limitations, and one example is a contact type heating method in which a heating medium is directly brought into contact with a part where the gas permeation film 16m and the base part 16b overlap with each other outside the case 10. Thus, at least the gas permeation film 16m is locally melted to facilitate the flow. Examples of the contact type heat processing method include thermal pressing, ultrasonic heating, impulse fusing, and the like. In a preferred aspect, the gas permeation film 16m and/or the base part 16b is melted by thermal pressing. However, the heat processing method may alternatively be a non-contact type heat processing method such as laser heating.

FIG. 4 is a diagram corresponding to FIG. 3 in this step and FIG. 5 is a perspective view schematically illustrating the vicinity of the electrolyte solution injection hole 15. As illustrated in FIG. 4 and FIG. 5, in this embodiment, first, the gas permeation film 16m is placed on the outer flange part 16f1 of the base part 16b at the upper surface 14u of the case 10 (here, the sealing plate 14). The outer flange part 16f1 and the gas permeation film 16m have substantially the same outer shape. As illustrated in FIG. 5, here, the gas permeation film 16m has a circular shape and the outer flange part 16f1 has an annular shape.

Next, as illustrated in FIG. 4, a heated annular metal plate (heating medium) HP is pressed against an outer peripheral part of the gas permeation film 16m from above and thermally pressed thereon. The temperature of the metal plate HP is preferably more than or equal to the melting point (for example, melting point + 5°C or more) of the resin material of the gas permeation film 16m so that at least the gas permeation film 16m is melted easily. The temperature of the metal plate HP is more preferably more than or equal to the melting point (for example, melting point + 5°C or more) of the resin material of the outer flange part 16f1. Thus, the gas permeation film 16m is thermally fused to the base part 16b, the thermal fusion part PF is formed at the interface between the gas permeation film 16m and the base part 16b, and moreover, the electrolyte solution injection hole (penetration hole) 15 is sealed.

### <Application of electrical energy storage device 100>

The electrical energy storage device 100 can be used in various applications, and for example, suitably used as a motive power source (electrical power source for driving) for a motor mounted on a vehicle such as a passenger car or a truck. Although the type of vehicles is not particularly limited, examples thereof may include a plug-in hybrid electric vehicle (PHEV), a hybrid electric vehicle (HEV), a battery electric vehicle (BEV), and the like.

Although the preferable embodiments of the present disclosure have been described above, they are merely examples. The present disclosure can be implemented in various other modes. The present disclosure can be implemented based on the contents disclosed in the present specification and the technical common sense in the relevant field. The techniques described in the scope of claims include those in which the embodiments exemplified above are variously modified and changed. For example, another modification can replace a part of the aforementioned embodiment or be added to the aforementioned embodiment. Additionally, the technical feature may be deleted as appropriate unless such a feature is described as an essential element.

As described above, the following items are given as specific aspects of the art disclosed herein.
Item 1: The electrical energy storage device including: the case that is made of metal and includes the penetration hole; the electrode body that is accommodated in the case; and the sealing member that seals the penetration hole, in which the sealing member includes the base part that is made of resin and is integrated with the case so as to continuously cover at least the peripheral part of the penetration hole at the inner wall of the penetration hole and the outer surface of the case, and the gas permeation film that is made of resin and is thermally fused to the base part outside the case so as to cover the penetration hole.
Item 2: The electrical energy storage device according to Item 1, in which the base part further continuously covers the peripheral part of the penetration hole at the inner surface of the case.
Item 3: The electrical energy storage device according to Item 1 or 2, in which at least one of the peripheral part of the penetration hole at the outer surface of the case and the peripheral part of the penetration hole at the inner surface of the case is subjected to the surface roughening processing.
Item 4: The electrical energy storage device according to Item 3, in which the surface roughening processing is performed continuously in the circumferential direction of the penetration hole.
Item 5: The electrical energy storage device according to any one of Items 1 to 4, in which the surface of the case where the penetration hole is provided has a thickness of 5 mm or less.
Item 6: The electrical energy storage device according to any one of Items 1 to 5, in which the base part is formed of at least one resin material of polyethylene, polypropylene, polyamide, and polyphenylene sulfide.
Item 7: The electrical energy storage device according to any one of Items 1 to 6, in which the gas permeation film is formed of at least one resin material of polyethylene and polytetrafluoroethylene.
Item 8: The manufacturing method for an electrical energy storage device, including: the integrating step of preparing the case that is made of metal and includes the penetration hole and integrating the base part made of resin with the case so as to continuously cover at least the peripheral part of the penetration hole at the inner wall of the penetration hole and the outer surface of the case; the preparing step of preparing the assembly including the case integrated with the base part and the electrode body accommodated in the case; and the sealing step of closing the penetration hole by thermally fusing the gas permeation film made of resin to the base part along the radial direction of the penetration hole outside the case.
Item 9: The manufacturing method according to Item 8, further including the liquid injecting step of injecting the electrolyte solution into the case through the penetration hole after the preparing step.
Item 10: The manufacturing method according to Item 8 or 9, in which in the integrating step, the base part is integrated with the case by the insert molding.

### [Reference Signs List]

10 Case
14 Sealing plate
14u Upper surface (outer surface)
14d Lower surface (inner surface)
15 Electrolyte solution injection hole (penetration hole)
16 Sealing member
16b Base part
16s Shaft part
16f1 Outer flange part
16f2 Inner flange part
16m Gas permeation film
20 Electrode body
100 Electrical energy storage device

## Claims

1. An electrical energy storage device (100) comprising:
a case (10) that is made of metal and includes a penetration hole (15);
an electrode body (20) that is accommodated in the case (10); and
a sealing member (16) that seals the penetration hole (15), wherein the sealing member (16) includes a base part (16b) that is made of resin and is integrated with the case (10) so as to continuously cover at least a peripheral part of the penetration hole (15) at an inner wall of the penetration hole (15) and an outer surface (14u) of the case (10), and a gas permeation film (16m) that is made of resin and is thermally fused to the base part (16b) outside the case (10) so as to cover the penetration hole (15).

2. The electrical energy storage device (100) according to claim 1, wherein the base part (16b) further continuously covers the peripheral part of the penetration hole (15) at an inner surface of the case (10).

3. The electrical energy storage device (100) according to claim 1 or 2, wherein at least one of the peripheral part of the penetration hole (15) at the outer surface (14u) of the case (10) and the peripheral part of the penetration hole (15) at the inner surface of the case (10) is subjected to surface roughening processing.

4. The electrical energy storage device (100) according to claim 3, wherein the surface roughening processing is performed continuously in a circumferential direction of the penetration hole (15).

5. The electrical energy storage device (100) according to any one of claims 1 to 4, wherein a surface of the case (10) where the penetration hole (15) is provided has a thickness of 5 mm or less.

6. The electrical energy storage device (100) according to any one of claims 1 to 5, wherein the base part (16b) is formed of at least one resin material of polyethylene, polypropylene, polyamide, and polyphenylene sulfide.

7. The electrical energy storage device (100) according to any one of claims 1 to 6, wherein the gas permeation film (16m) is formed of at least one resin material of polyethylene and polytetrafluoroethylene.

8. A manufacturing method for an electrical energy storage device (100), comprising:
an integrating step of preparing a case (10) that is made of metal and includes a penetration hole (15) and integrating a base part (16b) made of resin with the case (10) so as to continuously cover at least a peripheral part of the penetration hole (15) at an inner wall of the penetration hole (15) and an outer surface (14u) of the case (10);
a preparing step of preparing an assembly including the case (10) integrated with the base part (16b) and an electrode body (20) accommodated in the case (10); and
a sealing step of closing the penetration hole (15) by thermally fusing a gas permeation film (16m) made of resin to the base part (16b) along a radial direction of the penetration hole (15) outside the case (10).

9. The manufacturing method according to claim 8, further comprising a liquid injecting step of injecting an electrolyte solution into the case (10) through the penetration hole (15) after the preparing step.

10. The manufacturing method according to claim 8 or 9, wherein in the integrating step, the base part (16b) is integrated with the case (10) by insert molding.
